# EUROPEAN PATENT SPECIFICATION

(11) **EP 1 046 491 B1**
(45) Date of publication and mention of the grant of the patent: **18.06.2003**
(21) Application number: 00650037.5
(22) Date of filing: 20.04.2000
(51) Int. Cl.: B32B 13/04, E04F 13/14, E04F 13/08

(54) **A cladding panel**
Fassadenplatte
Panneau de revêtement

(30) Priority: 20.04.1999 IE 990332
(43) Date of publication of application: 25.10.2000
(73) Proprietor: Kelly, Antoinette Nora, Knocklyon, Dublin 16 (IE); McNally, Michael, Knocklyon, Dublin 16 (IE)
(72) Inventor: Kelly, Antoinette Nora, Dublin 16 (IE); McNally, Michael, Dublin 16 (IE); Flynn, James, Dublin 16 (IE)
(74) Representative: Schütte, Gearoid

(56) References cited:
- EP-A- 0 244 312
- DE-A- 2 314 658
- ES-A- 8 608 087
- FR-A- 2 345 294
- FR-A- 2 553 807

## Description

### Introduction

The invention relates to a cladding panel for walls, and in particular to a cladding panel for party walls.

Party walls in buildings are provided between separate but adjacent dwellings or premises, for example, between separate adjacent apartments in an apartment block or between separate houses in semi-detached or terraced housing construction. The party wall forms the common partition or dividing wall between the two apartments or houses. Noise pollution is becoming more prevalent in today's society. It is a particular problem in adjoining party walls of dwellings, such as terraced or semi-detached houses, flats and apartments. Party walls in such buildings are typically built of 215 mm solid block with each face of the wall being covered in a coating of a sand and cement mix with a plaster finish to try to meet the current building regulations which require a 53 decibel noise reduction through the party wall. There are a number of problems that can arise with such party walls. Surface cracking can occur in the plaster due to moisture retained in the sand and cement layer. Proper drying out can take up to six weeks, leading to construction delays. Mapping can occur in the plaster surface due to localised dampness. Further, the application of the sand and cement layer and plaster finish requires a skilled labourer and is relatively time consuming, both of which add to the expense of construction.

In the prior art FR2553807 discloses a prefabricated panel comprising a board of insulating material with integrated laths which is bonded to a plaster facing board.

A further method of addressing the problem of noise pollution is the use of acoustic tiles, made from a soft, sound absorbing material. However, because these tiles are designed to be mounted on a wall facing an interior of a room, they tend to adversely affect the aesthetic appearance of the wall.

It is an object of the present invention to provide a cladding panel which overcomes at least some of the above problems.

It is a particular object of the invention to provide a cladding panel which is effective in absorbing sound, which is simple to manufacture and which is easy to handle and mount on a wall.

### Statements of Invention

According to the invention there is provided a prefabricated composite cladding panel comprising a plasterboard panel having a front face and a rear face, an associated cork panel being laminated onto the rear face of the plasterboard panel and being rigidly secured to the rear face of the plasterboard panel characterised in that the cork panel has a thickness in the range 5mm to 16mm and the cork panel has a density of at least 100kg/m³. A panel formed in accordance with the invention provides a means of effectively soundproofing a wall while maintaining the aesthetic appearance of conventional domestic interior wall cladding. A further advantage of using panels according to the invention is that they can be easily applied to walls on existing buildings. Further, as the layer of cork material is directly applied to the plasterboard, it provides a unitary composite panel having a number of advantages including ease of manufacture, ease of handling and application, improved soundproofing and excellent exterior aesthetic appearance.

Ideally the cork has a density in the range 150 kg/ m³ - 190 kg/ m³. Most preferably the cork has a density of 170 kg/ m³.

In a further embodiment of the invention the cork panel comprises an agglomerated cork panel. Ideally, the cork comprises Acousti Cork (Trade Mark) manufactured by the Amorim Group in Portugal.

In another embodiment the cork panel has an inner face and an outer face, the inner face of the cork panel being bonded directly to the rear face of the plasterboard panel by adhesive.

In a preferred embodiment the adhesive is a water resistant polyvinyl acetate adhesive.

In another aspect the invention provides a cladding system for covering a partition wall with a plurality of prefabricated composite cladding panels, each composite cladding panel comprising a plasterboard panel having a front face and a rear face, an associated panel of sound-proofing material being attached to the rear face of the plasterboard panel, the system comprising mounting each composite cladding panel directly onto the wall by means of a plurality of spaced-apart dabs of adhesive mounted-between a rear face of the composite cladding panel and the wall. The adhesive may conveniently comprise a wallboard bonding compound.

In a preferred embodiment the system includes the step of making the adhesive dabs of sufficient depth to support the composite cladding panel spaced-apart from the wall to define a chasing gap between the composite cladding panel and the wall.

Conveniently the system may include the step of sizing the dabs for supporting the rear face of the composite cladding panel between 15mm and 20 mm from the wall face.

### Detailed Description Of The Invention

The invention will be more clearly understood from the following description of some embodiments thereof, given by way of example only with reference to the accompanying drawings, in which:-
Fig. 1 is a perspective view of a portion of a cladding panel according to the invention;
Fig. 2 is a front view of the cladding panel of Fig. 1;
Fig. 3 is a detail sectional view of a cladding panel of the invention mounted on a party wall;
Fig. 4 is a detail sectional view showing the mounting of the cladding panel on the party wall;
Fig. 5 is an exploded perspective view of a cladding panel according to an alternative embodiment of the invention; and
Fig. 6 is an exploded perspective view of a cladding panel according to a still further embodiment of the invention.

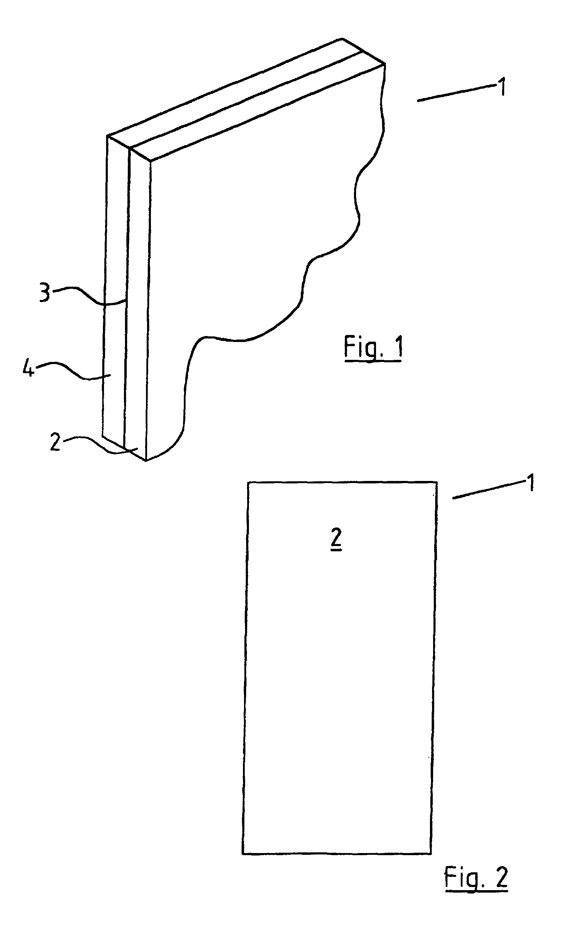

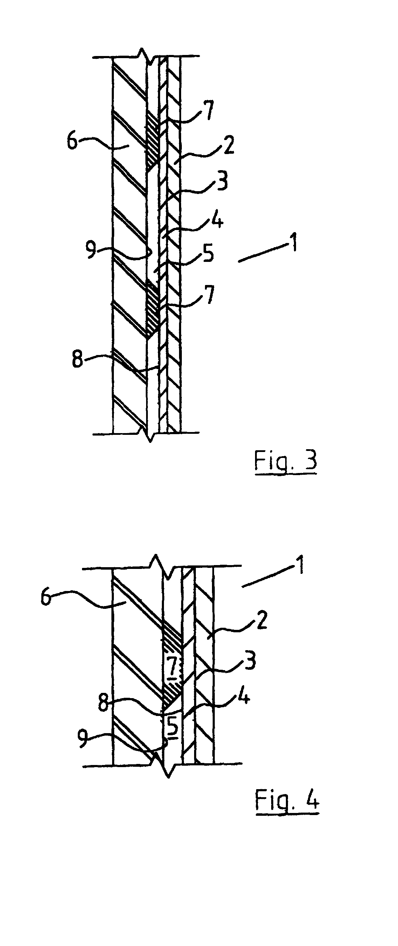

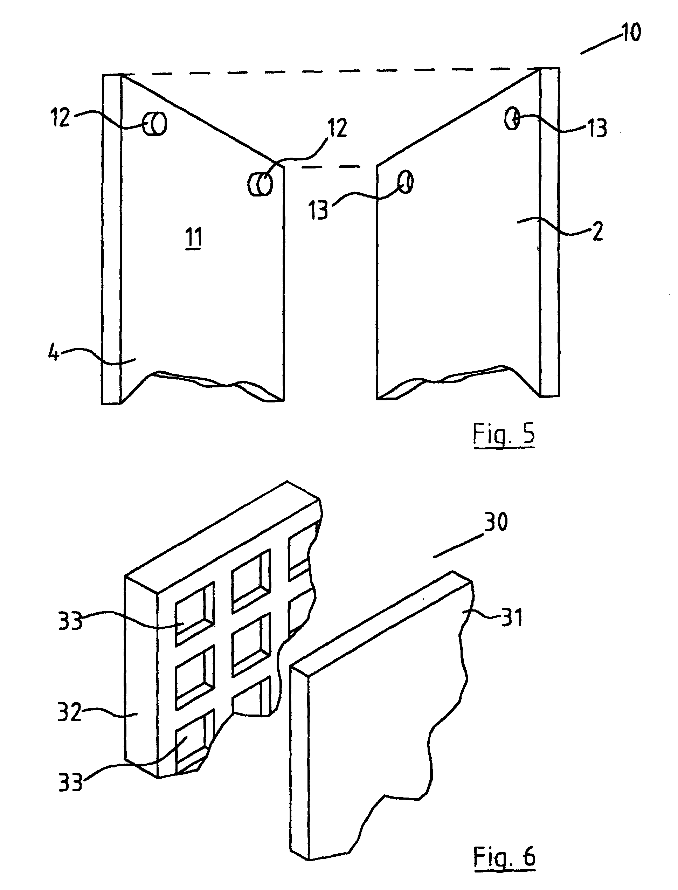

Referring to the drawings, and initially to Figs 1 to 4 thereof, there is illustrated a prefabricated composite cladding panel according to the invention indicated generally by the reference numeral 1. The cladding panel 1 comprises a layer of plasterboard 2 joined by a contact adhesive 3 to an associated cork panel 4. An inner face of the cork panel 4 is attached to a rear face of the plasterboard panel 2. The cork panel 4 most preferably comprises Acousti Cork (Trade Mark) manufactured by the Amorim Group in Portugal. The dimensions of the cladding panel 1 are similar to those of conventional plasterboards, namely (8' x 4') 2.44 m x 1.22 m. However, regarding the thickness of the panels 1, the panel comprises a 9.5 mm layer of plasterboard and an 8 mm layer of cork, giving an overall thickness of 17.5 mm. In use, the panel 1 according to the invention will usually be applied to a party wall with adhesive and/or pins as shown in Figs. 3 and 4.

Referring in particular to Figs. 3 and 4, the cladding panel 1 Is shown mounted on a party wall 6. Each panel 1 is mounted on the wall 6 by a number of spaced-apart dabs 7 of adhesive mounted between the outer face 8 of the cork panel 4 and an outer face 9 of the wall 6. Typically 75 x 50 mm dabs 7 are used. The adhesive may conveniently comprise a wallboard bonding compound or dry wall adhesive. It will be noted that the dabs 7 support the cladding panel 1 spaced apart from the wall 6 defining a chasing gap 5 between the cladding panel 1 and the wall 6 for reception of services such as electric cabling and pipework. Typically the chasing gap 5 is in the order of 15-20 mm. This advantageously simplifies the construction procedure as it is not necessary to cut out chasing grooves in the panel 1 or wall 6 to receive services such as cabling and/or pipework. Typically, both sides of the party wall 6 will be covered with the cladding panels 1.

If desired each panel may be additionally secured to the wall by means of fixing nails or pins or the like.

Preferably the cork panel 4 comprises an agglomerated cork panel. Ideally the cork in the cork panel 4 has a density of at least 100 kg/m³. Preferably the cork has a density in the range 150 kg/m³ - 190 kg/ m³. Most preferably the cork has a density 170 kg/ m³. It will further be noted that the cork panel 4 has an inner face which is bonded directly to the rear face of the plasterboard panel 2 by an adhesive. A water resistant polyvinyl acetate adhesive is preferred in this regard. However, any other suitable adhesive may be used.

It will be appreciated that the direct bonding of the cork panel 4 to the plasterboard panel 2 facilitates handling of the cladding panel 1 and the application of a number of the cladding panels 1 to a partition wall 6 or the like. The construction is greatly simplified and can be carried out by relatively unskilled labourers. A cladding system using the cladding panels 1 is further simplified by the manner in which the cladding panels 1 can be directly mounted onto the face 9 of the wall 6 by the dabs 7 of adhesive material. This allows the easy and rapid coverage of a wall with the cladding panels 1.

It will be appreciated that the cork panel 4 may be of any suitable thickness. A thickness of 8 mm has been found convenient, however, other thicknesses between 5 mm and 16 mm or any other suitable thickness may be used which provides the required noise insulation.

Similarly, the plasterboard panel 2 may be of any suitable thickness and will typically be of 9.5 mm (⅜"), or 12.5 mm (½") thickness.

Referring now to Fig. 5, there is illustrated another cladding panel according to the invention indicated generally by the reference numeral 10 in which parts similar to those of the panel described previously with reference to Figs. 1 to 4 are identified by the same reference numerals. In this construction an inner face 11 of the cork panel 4 includes a plurality (only two are shown) of cork plugs 12 which engage with corresponding sockets 13 formed on the plasterboard 2 when the cork panel 4 and the plasterboard 2 are joined in a face to face manner. Although it is not illustrated in Fig. 5, the plugs 12 may be longer than the sockets 13 so that when the plugs 12 and sockets 13 mate, the plugs 12 act as a spacer between the cork panel 4 and the plasterboard 2. Thus, a further layer of noise insulation is introduced into the panel 10. The use of corresponding plugs 12 and sockets 13 on the plasterboard 2 and the soundproofing panel 4 may obviate the need for a bonding agent. The use of this construction is similar to that for the previous embodiment

Referring to Fig. 6, there is illustrated a further construction of cladding panel according to the invention, indicated generally by the reference numeral 30 and comprising a cork panel 31 and a plasterboard 32. In this embodiment, the plasterboard 32 includes a plurality of cellular depressions 33 which provide pockets of air between the cork panel 31 and the plasterboard 32. The air pockets provide further soundproofing for the panel 30.

The invention is not limited to the embodiments hereinbefore described but may be varied in both construction and detail within the scope of the appended claims.

## Claims

1. A prefabricated composite cladding panel (1) comprising a plasterboard panel (2) having a front face and a rear face, an associated cork panel (4) being laminated onto the rear face of the plasterboard panel (2) and being rigidly secured to the rear face of the plasterboard panel (2), **characterised in that** the cork panel (4) has a thickness in the range 5mm to 16mm and the cork panel (4) has a density of at least 100kg/m³.

2. A cladding panel (1) as claimed in claim 1 wherein the cork has a density in the range 150 kg/m³ - 190 kg/m³.

3. A cladding panel (1) as claimed in claim 2 wherein the cork has a density of 170 kg/m³.

4. A cladding panel (1) as claimed in any preceding claim wherein the cork panel (4) comprises an agglomerated cork panel (4).

5. A cladding panel (1) as claimed in any preceding claim wherein the cork panel (4) has an inner face and an outer face, the inner face of the cork panel (4) being bonded directly to the rear face of the plasterboard panel (2) by adhesive.

6. A cladding panel (1) as claimed in claim 5 wherein the adhesive is a water resistant polyvinyl acetate adhesive.

7. A cladding system for covering a party wall (6) with a plurality of the prefabricated composite cladding panels (1) as claimed in any preceding claim, wherein each panel (1) is directly mounted onto the wall (6) by means of a plurality of spaced-apart dabs (7) of adhesive mounted between a rear face of the composite panel (1) and the wall (6).

8. A cladding system as claimed in claim 7 wherein the dabs (7) are of sufficient depth to support the cladding panel (1) spaced-apart from the wall (6) to define a chasing gap (5) between the cladding panel (1) and the wall (6).

9. A cladding system as claimed in claim 8 wherein the dabs (7) have been sized for supporting the rear face of the composite cladding panel (1) between 15mm and 20 mm from the wall (6) face.

## Patentansprüche

1. Vorgefertigte Verbundverkleidungsplatte (1), die eine Gipsbauplatte (2) mit einer Vorderfläche und einer Rückfläche, und eine verknüpfte Korkplatte (4) aufweist, die auf die Rückfläche der Gipsbauplatte (2) geschichtet wird und starr an der Rückfläche der Gipsbauplatte (2) befestigt wird, **dadurch gekennzeichnet, dass** die Korkplatte (4) eine Dicke im Bereich von 5 mm bis 16 mm hat und die Korkplatte (4) eine Dichte von wenigstens 100 kg/m³ aufweist.

2. Verkleidungsplatte (1) nach Anspruch 1, bei der der Kork eine Dichte im Bereich von 150 kg/m³ - 190 kg/m³ aufweist.

3. Verkleidungsplatte (1) nach Anspruch 2, bei der der Kork eine Dichte von 170 kg/m³ aufweist.

4. Verkleidungsplatte (1) nach einem vorhergehenden Anspruch, bei der die Korkplatte (4) eine Presskorkplatte (4) aufweist.

5. Verkleidungsplatte (1) nach einem vorhergehenden Anspruch, bei der die Korkplatte (4) eine Innenfläche und eine Außenfläche aufweist, wobei die Innenfläche der Korkplatte (4) durch Klebstoff direkt an die Rückfläche der Gipsbauplatte (2) geklebt wird.

6. Verkleidungsplatte (1) nach Anspruch 5, bei der der Klebstoff ein wasserfester Polyvinylacetat-Klebstoff ist.

7. Verkleidungssystem zum Bedecken einer Zwischenwand (6) mit einer Mehrzahl vorgefertigter Verbundverkleidungsplatten (1) nach einem vorhergehenden Anspruch, wobei jede Platte (1) direkt an die Wand (6) mittel einer Mehrzahl beabstandeter Tupfer (7) aus Klebstoff angebracht wird, die zwischen einer Rückfläche der Verbundplatte (1) und der Wand (6) angebracht sind.

8. Verkleidungssystem nach Anspruch 7, bei dem die Tupfer (7) eine ausreichende Tiefe aufweisen, um die Verkleidungsplatte (1) von der Wand (6) beabstandet zu halten und einen Aussparungsspalt (5) zwischen der Verkleidungsplatte (1) und der Wand (6) zu definieren.

9. Verkleidungssystem nach Anspruch 8, bei dem die Tupfer (7) mit solchen Abmessungen ausgelegt wurden, um die Rückfläche der Verbundverkleidungsplatte (1) zwischen 15 mm und 20 mm von der Fläche der Wand (6) zu halten.

## Revendications

1. Panneau de parement composite préfabriqué (1) comprenant un panneau de placoplâtre (2) ayant une face avant et une face arrière, un panneau de liège associé (4) appliqué sur la face arrière du panneau de placoplâtre (2) et fixé solidement à la face arrière du panneau de placoplâtre (2), **caractérisé en ce que** le panneau de liège (4) a une épaisseur dans la gamme de 5 mm à 16 mm et le panneau de liège (4) a une densité d'au moins 100 kg/m³.

2. Panneau de parement (1) selon la revendication 1, dans lequel le liège a une densité dans la gamme de 150 kg/m³ à 190 kg/m³.

3. Panneau de parement (1) selon la revendication 2, dans lequel le liège a une densité de 170 kg/m³.

4. Panneau de parement (1) selon l'une quelconque des revendications précédentes, dans lequel le panneau de liège (4) comprend un panneau de liège aggloméré (4).

5. Panneau de parement (1) selon l'une quelconque des revendications précédentes, dans lequel le panneau de liège (4) comporte une face interne et une face externe, la face interne du panneau de liège (4) étant collée directement à la face arrière du panneau de placoplâtre (2) par un adhésif.

6. Panneau de parement (1) selon la revendication 5, dans lequel l'adhésif est un adhésif d'acétate de polyvinyle résistant à l'eau.

7. Système de parement pour couvrir une paroi de séparation (6) avec une pluralité de panneaux de parement composites préfabriqués (1) selon l'une quelconque des revendications précédentes, dans lequel chaque panneau (1) est monté directement sur la paroi (6) au moyen d'une pluralité de gouttes espacées (7) d'adhésif appliquées entre une face arrière du panneau composite (1) et la paroi (6).

8. Système de parement selon la revendication 7, dans lequel les gouttes (7) sont suffisamment profondes pour maintenir le panneau de parement (1) écarté de la paroi (6) afin de définir un espace de passage de tuyaux (5) entre le panneau de parement (1) et la paroi (6).

9. Système de parement selon la revendication 8, dans lequel les gouttes (7) ont été dimensionnées pour maintenir la face arrière du panneau de parement composite (1) à un écartement entre 15 mm et 20 mm de la face de la paroi (6).
